# EUROPEAN PATENT SPECIFICATION

(11) **EP 2 271 197 B1**
(45) Date of publication and mention of the grant of the patent: **25.11.2015**
(21) Application number: 09739035.5
(22) Date of filing: 27.04.2009
(51) Int. Cl.: A01C 5/00, A01C 7/06

(54) **DEVICE FOR A COULTER FOR DISPOSING PARTICLES AND FLUID**
VORRICHTUNG FÜR EIN PFLUGMESSER ZUR ENTSORGUNG VON PARTIKELN UND FLÜSSIGKEITEN
DISPOSITIF POUR COUTRE DESTINÉ À DISPOSER DES PARTICULES ET UN FLUIDE

(30) Priority: 28.04.2008 NO 20081997
(43) Date of publication of application: 12.01.2011
(73) Proprietor: Agromiljø AS, 4160 Finnøy (NO)
(72) Inventor: VASTVEIT, Kjell, N-4160 Finnøy (NO)
(74) Representative: Håmsø Patentbyrå ANS
(86) International application number: PCT/NO2009/000157
(87) International publication number: WO 2009/134136

(56) References cited:
- EP-B1- 1 174 547
- WO-A1-98/42177
- DE-B- 1 255 595
- GB-A- 2 164 078
- US-A- 1 369 037
- US-A- 3 251 325
- US-A- 5 739 535
- US-A1- 2006 169 189

## Description

The invention concerns a device for a coulter, wherein a share is provided with an opening arranged for receiving a share fastener, the opening and the share fastener being provided with complementary side surfaces converging in the working direction of the coulter, wherein one or more seats are formed in the share fastener, each of which is arranged for receiving a support formed in the opening of the share, and wherein a locking device maintains the share in a supporting manner against the converging side surfaces of the share fastener, and against the seat/seats, upon bearing against a rear side surface of the share fastener and a rear portion of the share.

Devices for a coulter are disclosed for instance in US-A-2006/169189 and US 1369037.

When disposing particles into a soil, for example when disposing particles in the form of sowing seeds or granulated fertiliser into a sowing bed, and particularly when the disposing is to occur in an established stand, for example in context of remedial sowing of a meadow subjected to frost damage, or sowing of a stump meadow subsequent to grain production, it is important for the coulter to penetrate down to the prescribed working depth without tearing up the soil surface substantially. Oftentimes a coulter is used for this purpose, wherein one or more discs cut through the surface and form an opening into which a coulter, which is positioned closely against the disc, may be introduced for disposing the particles.

The technique is also used for disposing fluids, for example for disposing liquid fertiliser, either alone or in a mixture of sowing seeds or other particles.

Plant remnants and sticky soil tend to block the coulter in such a way that the material, i.e. particles and/or fluid, to be placed into the soil is prevented from flowing out of the coulter. The problem is enhanced when liquid fertiliser is to be disposed together with sowing seeds, insofar as the fluid moistens the surfaces of the coulter and also causes drier soil particles to stick to each other and to the coulter. As such, there is a need for a simple dismantling of the coulter for maintenance.

The object of the invention is to remedy or to reduce at least one of the disadvantages of the prior art.

The object is achieved as disclosed in the following description and in the subsequent claims.

More specifically, the invention concerns a device according to claim 1.

The support portion for the seat of the share fastener may be formed on an underside of a share wing protruding outwards from a side surface on the share.

The support portion for the seat of the share may be formed on a bottom surface of the share fastener.

The share fastener may be provided with a seat disposed in connection with one of the two opposite, converging side surfaces of the share fastener.

The share fastener may be formed with a trapezoidal cross section.

The front portion of the opening may be provided with a support arranged in a manner allowing it to bear against at least a portion of the share fastener, and simultaneous with the share bearing against the seat of the share fastener and the share fastener bearing against the seat of the share.

A share body may be formed from a plate material.

The share body may be formed from a form-cut plate material, wherein the share wings are formed by buckling two edge portions along a respective buckle line, and the rear portion of the share is formed by bending about an axis having a radius complementary to a portion of the sowing pipe.

Alternatively, the share body may be formed via metal casting.

In the following, an example of a preferred embodiment is described and depicted in the accompanying drawings, where:
- Fig. 1: shows a side view of an arrangement having two coulters according to the invention disposed on a mutual frame;
- Fig. 2: shows, on a larger scale, an end view seen from behind of a part of the coulter;
- Fig. 3a: shows a view from above of the share of the coulter;
- Fig. 3b: shows a view from above of a share fastener;
- Fig. 4: shows, on a smaller scale, the arrangement having two coulters as seen from above;
- Fig. 5: shows the steps of dismantling the share on the coulter; and
- Fig. 6: shows an outline of a form-cut plate material for formation of a share body.

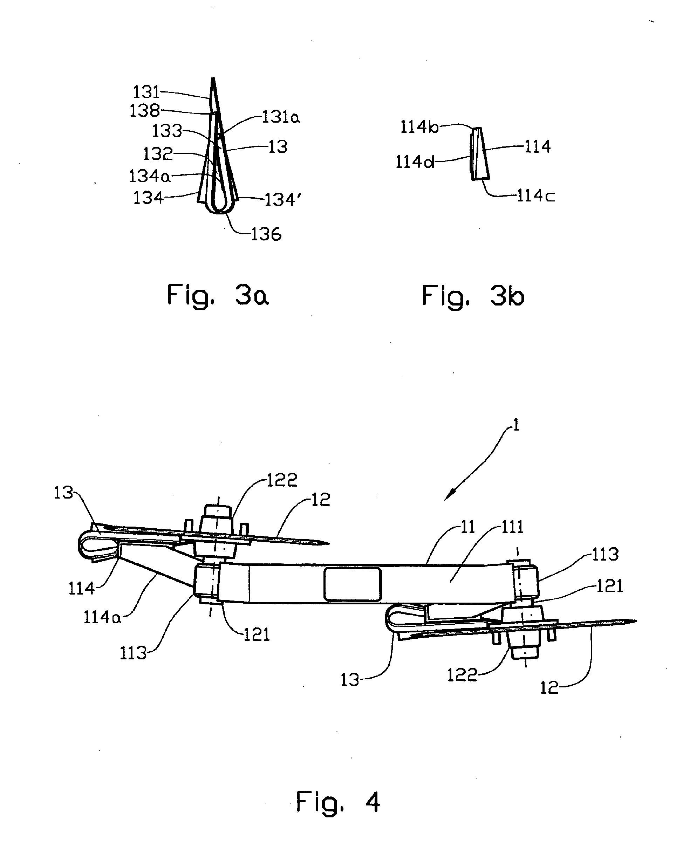

In the figures, reference numeral 1 denotes a coulter arrangement having two coulters according to the invention suspended from a main frame 112. The coulters 1 are fixed each to an end of a frame beam 111, wherein a fastener sleeve 113 forms a fastener for a disc 12 by virtue of an axle 121 (see figure 4) being fixed to the fastener sleeve 113. The disc 12 is rotatably supported on the axle 121 by means of a bearing 122 (see figure 4).

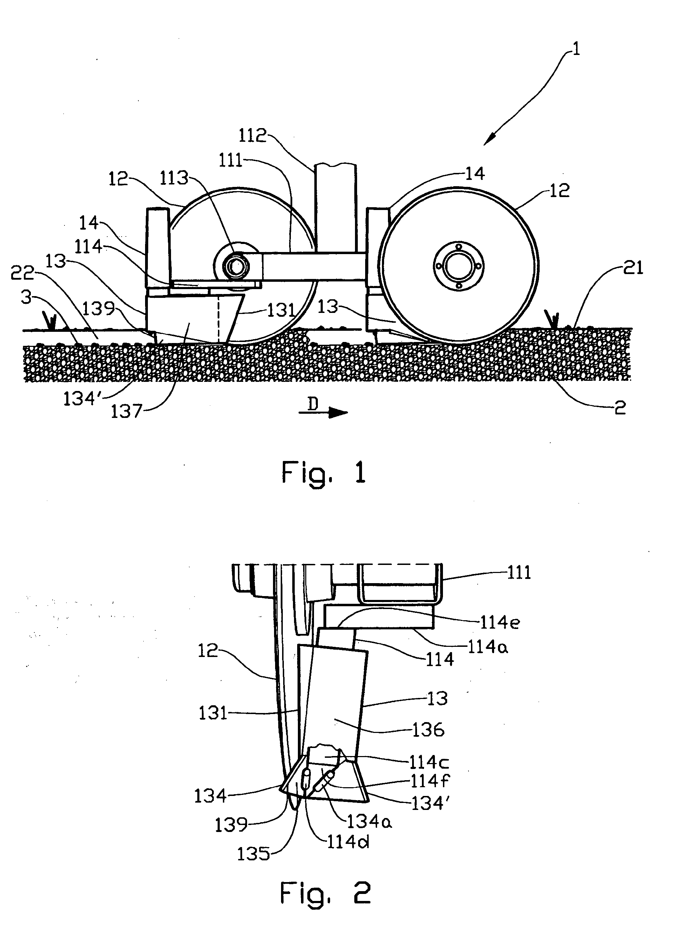

A share fastener 114 is fixed to the frame beam 111, the share fastener 114 extending downwards from an arm 114a. The share fastener 114 has a trapezoidal cross section by virtue of two opposite side surfaces converging in the working direction of the coulter 1, as indicated with the arrow D in figure 1, and forms a wedge-shaped, forward share fastener portion 114b. A top surface 114e and a bottom surface 114f diverge in direction D. A centre axis of the share fastener 114 is tilted towards the disc 12 in a downwards direction.

A seat 114d in the form of a welded-on, lengthy element having circular cross section extends outwards from one of the two converging side edges of the bottom surface 114f. It is obvious to the skilled person to form such a seat 114d in a number of shapes and in different ways.

A share 13 is formed with a tilting share front 131. An opening 132 in the share 13 is formed with a front portion being complementary with the cross section of the share fastener 114 whilst two internal side surfaces 133 converge in the working direction D of the coulter 1. At a lower portion of external side surfaces 137 of the share 13, first and second share wings 134, 134' extend at an angle outwards and downwards and with increasing width from the front and backwards. A rear portion 136 of the share 13 is formed by virtue of the share wall extending continuously in a semicircular shape so as to form a connection between the two side walls of the share 13.

The outwards-tilting underside of the first share wing 134 forms a support 135 for a seat 114d of the share fastener 114. The outwards-tilting underside of the second share wing 134' is provided with a seat 134a in the form of a welded-on, lengthy element having circular cross section and arranged to bear against the bottom surface 114f. It is obvious to the skilled person to form such a seat 134a in a number of shapes and in different ways.

A support 131a is fixed in the opening 132 of the share 13 and against the share front 131, the support 131a being arranged to bear against the front of the share fastener 114 so as to provide a precise positioning of the share 13 also in the working direction D of the coulter.

Typically, the share 13 is made from a plate material of even thickness, wherein the two side walls are joined by welding in a region 138 near the share front 131. An outlet 139 is formed between the rear end of the share wings 134, 134', the lower edge of the rear share portion 136 being positioned somewhat higher than the lower edge of the share wings 134, 134'.

When the share 13 is disposed in an operational position on the share fastener 114 the first share wing 134 bears against the seat 114d of the share fastener 114, which prevents the share 13 from moving downwards on the share fastener 114.

Simultaneously, the second seat 134a of the share wing 134' bears against the bottom surface 114f of the share fastener 114 and prevents the share 13 from moving upwards on the share fastener 114. In this position, an internal opening is formed between the rear edge 136 of the share 13 and the rear portion 114c of the share fastener 114. A sowing pipe 14, which is arranged for interconnection with a supply line (not shown) from e.g. an output unit of a sowing machine, has a lower portion 141 with a shape that bears in a supporting manner against the share 13 and against the share fastener 114 upon introduction from above into the internal opening between the rear edge 136 of the share 13 and the rear portion 114c of the share fastener 114. Thereby, the share 13 is locked onto the share fastener 114, insofar as the internal side surfaces 133 of the front portion of the opening are bearing against the front portion 114b of the share fastener, the supports 135 are resting on the seats 114d, and the sowing pipe 14 is preventing the share 13 from moving forward.

In a sowing bed 2, the coulter 1 forms a sowing furrow 22 extending downwards from a soil surface 21 for placement of sowing seeds 3 and/or other particles or fluids at a depth below the soil surface 21 defined by vertical position of the coulter relative to depth wheels (not shown) connected to the main frame 112. It is obvious for a person skilled in the area to allow the size of the share 13 and the shape and size of the share wings 134, 134' to be adapted to the area of use of the share 13, insofar as disposing large fluid quantities may require a larger space in the sowing furrow 22 formed by the movement of the share 13 through the sowing bed 2 than that of disposing particles 3 in the form of sowing seeds or artificial fertiliser into the sowing bed 2.

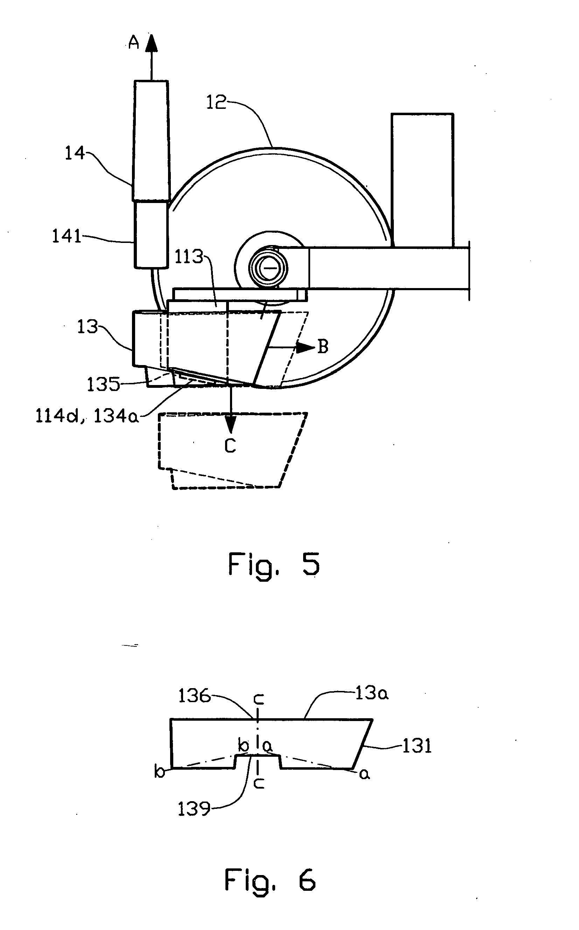

Figure 5 shows a principle drawing of how the share is dismantled from the coulter, the operation taking place in the following order:
A pulling up the sowing pipe 14
B moving the share 13 forward so as to free the supports 135 from the seats 114d, 134a
C pulling the share 13 downwards and away from the share fastener 114.

During assembling the operation takes place in the opposite order.

Figure 6 shows the contours of a form-cut plate material from which a share body 13a of the share 13 is formed in the exemplary embodiment. The share wings 134 are formed by buckling two edge portions along a respective buckle line a-a, b-b, and the rear portion 136 of the share is formed in response to bending about an axis c-c having a radius complementary to a portion 141 of the sowing pipe 14. The seat 134a and the support 131a are welded onto the ready-bent share body.

When using the coulter 1 according to the invention, a fast dismantling of the share 13 is achieved by virtue of removing the sowing pipe 14 and pulling the share 13 forwards until it is freed from the seat 114d. This operation may be carried out without any use of tools, insofar as the share 13, when in an operational position, mainly engages the wedge-shaped, front portion 114b of the share fastener 114, the front of the share fastener 114 as well as the seats 114d, 134a, whereas the sowing pipe 14 ensures that the share 13, during unintentional reversing prior to lifting the coulter 1 up from the sowing bed 2, is not moved forward on the share fastener 114 and becomes unfastened. The sowing pipe 14 is kept in place by friction against the share 13 and the share fastener 114 as well as by its own weight and the weight of an associated, overlying supply hose (not shown).

Correspondingly, the coulter 1 according to the invention provides a simple operation of assembling the share 13 upon having been disassembled from the coulter 1 due to maintenance, for example for cleaning or repair.

## Claims

1. A device for a coulter (1) comprising a disc (12) and a share (13) provided with a share front (131) facing in the working direction of the coulter (1), wherein the share (13) is provided with a vertical opening (132) where a front portion (133) is arranged with two opposite side surfaces (133) converging in the direction of the share front (131), and being arranged for receiving a complementary portion (114b) of a share fastener (114);
the share (13) is provided with a support portion (135) arranged in a manner allowing it to bear against a substantially horizontally-arranged seat (114d) disposed on the share fastener (114);
the share (13) is provided with a seat (134a) arranged in a manner allowing it to bear against a support portion (114f) disposed on the share fastener (114), the share (13) bearing in a supporting manner against the share fastener portion (114b);
**characterized in that** the opening (132) of the share (13) is arranged in a manner allowing it to receive a locking device (14)
which, upon bearing against a rear portion (14c) of the share fastener (114), bears in a supporting manner against a rear portion (136) of the opening (132), and
the locking device (14) is a sowing pipe arranged for supply of particles (3) and/or fluid to a soil (2) in immediate vicinity of the share (13).

2. The device according to claim 1, **characterized in that** the support portion (135) for the seat (114d) of the share fastener (114) is formed on an underside of a share wing (134) protruding outwards from a side surface (137) on the share (13).

3. The device according to claim 1, **characterized in that** the support portion (114f) for the seat (134a) of the share (13) is formed on a bottom surface of the share fastener (114).

4. The device according to claim 1, **characterized in that** the share fastener (114) is provided with a seat (114d) disposed in connection with one of the two opposite, converging side surfaces of the share fastener (114).

5. The device according to claim 1, **characterized in that** the share fastener (114) is formed with a trapezoidal cross section.

6. The device according to claim 1, **characterized in that** the front portion (133) of the opening (132) is provided with a support (131a) arranged in a manner allowing it to bear against at least a portion of the share fastener (114), and simultaneous with the share (13) bearing against the seat (114d) of the share fastener (114) and the share fastener (114) bearing against the seat (134a) of the share (13).

7. The device according to claim 1, **characterized in that** a share body (13a) is formed from a plate material.

8. The device according to claim 7, **characterized in that** the share body (13a) is formed from a form-cut plate material, wherein the share wings (134, 134') are formed by buckling two edge portions along a respective buckle line (a-a, b-b), and the rear portion (136) of the share (13) is formed in response to bending about an axis (c-c) having a radius complementary to a portion (141) of the sowing pipe (14).

9. The device according to claim 7, **characterized in that** the share body (13a) is formed via metal casting.

## Patentansprüche

1. Vorrichtung für ein Pflugmesser (1) aufweisend eine Scheibe (12) und eine Schar (13), welche eine Scharvorderseite (131) aufweist, die in Arbeitsrichtung des Pflugmessers (1) ausgerichtet ist, wobei die Schar (13) eine vertikale Öffnung (132) aufweist, wo ein Vorderbereich (133) mit zwei gegenüberliegenden Seitenflächen (133) ausgebildet ist, welche in Richtung der Scharvorderseite (131) konvergieren, und angeordnet ist, um einen komplementären Bereich (114b) eines Scharbefestigers (114) aufzunehmen;
die Schar (13) weist einen Trägerbereich (135) auf, welcher derart angeordnet ist, dass es diesem ermöglicht ist, gegen einen im Wesentlichen horizontal angeordneten Sitz (114d), welcher auf dem Scharbefestiger (114) angeordnet ist, zu drücken;
die Schar (13) weist einen Sitz (134a) auf, welcher derart angeordnet ist, dass es diesem ermöglicht ist, gegen einen auf dem Scharbefestiger (114) angeordneten Trägerbereich (114f) zu drücken, wobei die Schar (13) in einer unterstützenden Weise gegen den Trägerbereich (114b) drückt;
**dadurch gekennzeichnet, dass**
die Öffnung (132) der Schar (13) derart angeordnet ist, dass es dieser ermöglicht ist, eine Verriegelungsvorrichtung (14) aufzunehmen, welche, nachdem gegen einen Rückbereich (14c) des Scharbefestigers (114) gedrückt wird, in einer unterstützenden Weise gegen einen Rückbereich (136) der Öffnung (132) drückt, und
die Verriegelungsvorrichtung (14) eine Särohr ist, welches zur Zufuhr von Partikeln (3) und/oder Flüssigkeit an einen Boden (2), der sich in unmittelbarer Nähe zur Schar (13) befindet, angeordnet ist.

2. Vorrichtung gemäss Anspruch 1, **dadurch gekennzeichnet, dass** der Trägerbereich (135) für den Sitz (114d) des Scharbefestigers (114) an einer Unterseite eines Scharflügels (134), welcher von einer Seitenfläche (137) auf der Schar (13) nach aussen herausragt, gebildet ist.

3. Vorrichtung gemäss Anspruch 1, **dadurch gekennzeichnet, dass** der Trägerbereich (114f) für den Sitz (134a) der Schar (13) auf einer Unterfläche des Scharbefestigers (114) gebildet ist.

4. Vorrichtung gemäss Anspruch 1, **dadurch gekennzeichnet, dass** der Scharbefestiger (114) einen Sitz (114d) aufweist, welcher in Verbindung mit einer der zwei gegenüberliegenden, konvergierenden Seitenflächen des Scharbefestigers (114) angeordnet ist.

5. Vorrichtung gemäss Anspruch 1, **dadurch gekennzeichnet, dass** der Scharbefestiger (114) mit einem trapezförmigen Querschnitt gebildet ist.

6. Vorrichtung gemäss Anspruch 1, **dadurch gekennzeichnet, dass** der Vorderbereich (133) der Öffnung (132) eine Stütze (131a) aufweist, welche derart angeordnet ist, dass es dieser ermöglicht ist, gegen mindestens einen Teil des Scharbefestigers (114) zu drücken, und gleichzeitig mit der Schar (13) gegen den Sitz (114d) des Scharbefestigers (114) zu drücken und den Scharbefestiger (114) gegen den Sitz (134a) der Schar (13) zu drücken.

7. Vorrichtung gemäss Anspruch 1, **dadurch gekennzeichnet, dass** ein Scharkörper (13a) aus einem Plattenmaterial gebildet ist.

8. Vorrichtung gemäss Anspruch 7, **dadurch gekennzeichnet, dass** der Scharkörper (13a) aus einem formgeschnittenen Plattenmaterial gebildet ist, wobei die Scharflügel (134, 134') durch Knicken von zwei Kantenbereichen entlang einer jeweiligen Kantenlinie (a-a, b-b) gebildet werden, und der Rückbereich (136) der Schar (13) in Antwort auf ein Verbiegen um eine Achse (c-c) mit einem Radius, der komplementär zu einem Bereich (141) des Särohrs (14) ist, gebildet wird.

9. Vorrichtung gemäss Anspruch 7, **dadurch gekennzeichnet, dass** der Scharkörper (13a) mittels Metallguss gebildet wird.

## Revendications

1. Un dispositif pour un coutre (1) comprenant un disque (12) et un soc (13) muni d'une partie avant (131) de soc faisant face en direction de travail du coutre (1), dans lequel le soc (13) est muni d'une ouverture verticale (132) où la portion avant (133) est agencée avec deux surfaces latérales opposées(133) convergeant en direction de la partie avant (131) de soc, et étant agencé pour recevoir une portion complémentaire (114b) d'une attache (114) de soc;
le soc (13) est muni d'une portion de support (135) agencée de manière à permettre de prendre appui sur un siège (114d) agencé essentiellement horizontalement, disposé sur l'attache (114) de soc,
le soc (13) est muni d'un siège (134a) agencé de manière à lui permettre de prendre appui sur une portion de support (114f) disposée sur l'attache (114) de soc, le soc (13) prenant appui sur la portion (114b) d'attache de soc de manière supportante, **caractérisé en ce que**
l'ouverture (132) du soc (13) est agencée de manière à lui permettre de recevoir un dispositif de verrouillage (14) qui, lorsqu'il prend appui sur un portion arrière (14c) de l'attache (114) de soc, prend appui de manière supportante sur la portion arrière (136) de l'ouverture (132), et
le dispositif de verrouillage (14) est une un tube d'ensemencement agencé pour l'approvisionnement en particules (3) et/ou en fluide à une terre (2) en voisinage immédiat du soc (13).

2. Le dispositif selon la revendication 1, **caractérisé en ce que** la portion de support (135) pour le siège (114d) de l'attache (114) de soc est formée sur un côté inférieur d'un aileron (134) de soc saillant vers l'extérieur depuis une surface latérale (137) du soc (13).

3. Le dispositif selon la revendication 1, **caractérisé en ce que** la portion de support (114f) pour le siège (134a) du soc (13) est formée sur une surface inférieure de l'attache (114) de soc.

4. Le dispositif selon la revendication 1, **caractérisé en ce que** l'attache (114) de soc est munie d'un siège (114d) disposé en connexion avec une des deux surfaces latérales opposées convergentes de l'attache (114) de soc.

5. Le dispositif selon la revendication 1, **caractérisé en ce que** l'attache (114) de soc est formée avec une section transversale en forme de trapèze.

6. Le dispositif selon la revendication 1, **caractérisé en ce que** la portion avant (133) de l'ouverture (132) est munie d'un support (131a) agencé de manière à lui permettre de prendre appui sur au moins une portion de l'attache (114) de soc, et simultanément avec le soc (13) prenant appui sur le siège (114d) de l'attache (114) de soc et l'attache (114) de soc prenant appui sur le siège (134a) du soc (13).

7. Le dispositif selon la revendication 1, **caractérisé en ce qu'**un corps (13a) de soc est formé à partir d'un matériau en plaque.

8. Le dispositif selon la revendication 7, **caractérisé en ce que** le corps (13a) de soc est formé à partir d'un matériau en plaque formé-découpé, dans lequel les ailerons de soc (134, 134') sont formés par gauchissement de deux portions de bord le long d'une ligne a-a, b-b de gauchissement respective, et la portion arrière (136) du soc (13) est formée en réponse au pliage autour d'un axe c-c ayant un rayon complémentaire à une portion (141) du tube d'ensemencement (14).

9. Le dispositif selon la revendication 7, **caractérisé en ce que** le corps de soc (13a) est formé à partir de coulage de métal.
